# EUROPÄISCHE PATENTSCHRIFT

(11) **EP 3 186 089 B1**
(45) Veröffentlichungstag und Bekanntmachung des Hinweises auf die Patenterteilung: **11.11.2020**
(21) Anmeldenummer: 15756912.0
(22) Anmeldetag: 31.08.2015
(51) Int. Cl.: B41J 3/407, G06T 7/00

(54) **VORRICHTUNG UND VERFAHREN ZUM BEDRUCKEN VON BEHÄLTNISSEN MIT FEHLERERFASSUNG**
DEVICE AND METHOD FOR PRINTING CONTAINERS HAVING ERROR DETECTION
DISPOSITIF ET PROCÉDÉ D'IMPRESSION SUR DES CONTENANTS COMPRENANT UNE DÉTECTION D'ERREURS

(30) Priorität: 29.08.2014 DE 102014112483
(43) Veröffentlichungstag der Anmeldung: 05.07.2017
(73) Patentinhaber: Krones AG, 93073 Neutraubling (DE)
(72) Erfinder: MAYER, Josef, 93073 Neutraubling (DE); LAUTERBACH, Florian, 93073 Neutraubling (DE); KRAUS, Andreas, 93073 Neutraubling (DE); SONNAUER, Andreas, 93073 Neutraubling (DE)
(74) Vertreter: Bittner, Bernhard
(86) Internationale Anmeldenummer: PCT/EP2015/069872
(87) Internationale Veröffentlichungsnummer: WO 2016/030543

(56) Entgegenhaltungen:
- EP-A1- 2 639 069
- WO-A2-03/106177
- DE-A1- 19 614 740
- DE-A1-102007 050 490
- US-A- 3 828 668
- US-A1- 2012 216 689

## Beschreibung

Die vorliegende Erfindung bezieht sich auf eine Vorrichtung und ein Verfahren zum Bedrucken von Behältnissen. Aus dem Stand der Technik ist es seit langem bekannt, dass Behältnisse mit Etiketten ausgestattet werden. Dabei sind verschiedene Arten an Etiketten bekannt, wie beispielsweise Bauchetiketten, Brustetiketten und dergleichen. In jüngerer Zeit sind jedoch auch Vorrichtungen und Verfahren bekannt, welche keine Etiketten an den Behältnissen aufbringen, sondern diese Behältnisse mit einem Druck, d.h. insbesondere einem Direktdruck versehen. Dabei ist es möglich, dass ein Druckaggregat beispielsweise stationär angeordnet ist und die an diesem Druckaggregat vorbeigeführten Behältnisse mit einem Druck versieht. Bei Einsatz derartiger Druckelemente kann es jedoch zu unterschiedlichsten Fehlern kommen, wie beispielsweise dem Ausfall einiger Druckdüsen und dergleichen. Derartige Fehler führen wiederum zu schlechten bzw. fehlerhaften Ausdrucken und damit zu Ausfällen bzw. Ausschuss. EP2639069 A1 offenbart eine Druckstation zum Bedrucken von dreidimensionalen Körpern mittels eines Inkjetdruckverfahren sowie ein Verfahren zum Feststellen von Fehlern in der Ausrichtung von Druckbildern. Um diese fehlerhafte Ausrichtung festzustellen, ist eine Kamera der Druckstation zugeordnet.

In WO03/106177 A2 wird eine Vorrichtung zur Bedruckung von Teilen mittels eines Inkjetdruckverfahren offenbart. In dieser Vorrichtung werden rotationssymmetrische Teile durch mehrere Bedruckungseinheiten bedruckt. Anschließend an diese Bedruckungseinheiten ist vor der Entladestation eine Inspektionseinheit zur Kontrolle der bearbeitenden Teile vorgesehen.

In der US2012/0216689 A1 ist eine Vorrichtung zum Bedrucken zylindrischer Behältnisse beschrieben, in welcher die zu bedruckenden Behältnisse auf einem Transportrad, auf Dornen angeordnet, an einem Hauptdruckrad vorbeigeführt und bedruckt werden. Diesem nachgeordnet ist ein "varnish wheel", mittels welchem die bedruckten Behältnisse mit einer Glasur/Lack versehen werden. Diesem nachgeordnet ist ein Inspektionstunnel, in welchem die Behältnisse mittels Kameras vollumfänglich inspiziert werden. Das Inspektionssystem untersucht die aufgenommenen Bilder auf Fehler oder Variationen in dem gedruckten Muster auf den einzelnen Behältnissen und identifiziert die einzelnen Dorne, die die jeweiligen fehlerhaft bedruckten Behältnisse transportiert hatten sowie auch das entsprechende Drucktuch mittels welchem das Behältnis bedruckt wurde. Die Haltedorne oder auch die Drucktücher können auf Grundlage eines Fehlers nachjustiert bzw. eingestellt werden.

Der vorliegenden Erfindung liegt daher die Aufgabe zugrunde, eine Vorrichtung und ein Verfahren zu schaffen, mit deren Hilfe der Ausschuss derartiger fehlerhafter Behältnisse verhindert oder verringert werden kann. Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Bedrucken von Behältnissen weist eine Transporteinrichtung auf, welche die auszustattenden bzw. zu bedruckenden Behältnisse entlang eines vorgegebenen Transportpfades transportiert. Dabei weist die Transporteinrichtung einen Träger und eine Vielzahl von an diesem Träger angeordneten Halteeinrichtungen zum Halten der zu bedruckenden Behältnisse auf, derart, dass die zu bedruckenden Behältnisse vereinzelt transportierbar sind. Weiterhin weist die Vorrichtung ein erstes Druckaggregat auf, welches die Behältnisse mit einem vorgegebenen Druckelement bzw. Bildelement bedruckt. Weiterhin weist die Vorrichtung ein zweites Druckaggregat auf, welches entlang des Transportpfades der Behältnisse nach dem ersten Druckaggregat angeordnet ist und welches die bereits mit dem ersten Druckelement bzw. Bildelement bedruckten Behältnisse (ebenfalls) mit einem zweiten Bildelement bedruckt.

Erfindungsgemäß weist die Vorrichtung eine in der Transportrichtung der Kunststoffbehältnisse den Druckaggregaten nachgeordnete Inspektionseinrichtung auf, welche den auf den Behältnissen angeordneten Druck inspiziert sowie eine Zuordnungseinrichtung, welche ein Inspektionsergebnis der Inspektionseinrichtung den Druckaggregaten zuordnet.

Bevorzugt setzt sich dieser Druck zumindest aus Komponenten des ersten Bildelements und des zweiten Bildelements zusammen. Bevorzugt kann sich dieser Druck aus mehreren Bildelementen zusammensetzen, welche insbesondere voneinander unterschiedliche Farben aufweisen. Bei dem Inspektionsergebnis kann es sich insbesondere um eine Aussage über eine Qualität eines auf dem Behältnis angebrachten Druckes handeln. Insbesondere kann das Inspektionsergebnis Aussagen über das Auftreten von Fehlern in den einzelnen Drucken bzw. Bildelementen enthalten. Dabei kann dieses Inspektionsergebnis einen etwa auftretenden Fehler bezeichnen.

Es wird daher vorgeschlagen, dass ein bestimmtes Behältnis sowohl von dem ersten Druckaggregat als auch von dem zweiten Druckaggregat bedruckt wird. Bevorzugt werden dabei zumindest teilweise gleiche Bereiche des Behältnisses mittels beiden Druckaggregaten bedruckt. Auf diese Weise können beispielsweise mehrere Farbkomponenten hintereinander auf dem Behältnis bzw. der Behältnisaußenwandung aufgebracht werden. Die Inspektionseinrichtung kann nunmehr durch eine entsprechende Auswertung beispielsweise im Fehlerfall feststellen, welches Druckaggregat einen Fehler produziert hat bzw. bei welchem Bedrucken durch welches Aggregat Fehler produziert wurden.

Damit ist es bevorzugt möglich, dass bei jeder Inspektion erfasst werden kann, von welchem Druckaggregat behandelt wurde. Da, gemäß der Erfindung, unterschiedliche Farben auf das Behältnis aufgedruckt werden, kann bereits durch die Auswertung der jeweiligen Farbe bzw. die Bestimmung der Farbe festgestellt werden, welches Druckaggregat diesen Druck aufgebracht hatte.

Bei einer weiteren vorteilhaften Ausführungsform weisen die Halteeinrichtungen Dreheinrichtungen auf, um die Behältnisse um deren Längsrichtung zu drehen. Auf diese Weise können nicht nur die Behältnisse an den Druckaggregaten vorbeigeführt werden, sondern auch noch um ihre eigene Rotations- bzw. Längsachse gedreht werden, so dass es möglich ist, einen Druck über weite Umfangsbereiche der Behältnisse an deren Außenwand anzubringen.

Bei einer weiteren vorteilhaften Ausführungsform weist die Transporteinrichtung einen umlaufenden Träger auf und insbesondere einen drehbaren Träger auf, an dem die Halteeinrichtungen angeordnet sind.

Bei einer weiteren vorteilhaften Ausführungsform weist die Vorrichtung eine Ausschleuseeinrichtung auf, welche in der Transportrichtung der Behältnisse stromabwärts bezüglich der Inspektionseinrichtung angeordnet ist. Diese Ausschleuseeinrichtung ist bevorzugt dazu geeignet bzw. bestimmt, als fehlerhaft - insbesondere fehlerhaft bedruckt - erkannte Behältnisse aus dem Behältnisstrom auszuschleusen. Vorteilhaft ist eine Drehachse, um welche die Behältnisse selbst drehbar sind, parallel zu einer Drehachse des Trägers, an dem alle Halteeinrichtungen angeordnet sind. Vorteilhaft verläuft diese Drehachse vertikal.

Bei einer weiteren vorteilhaften Ausführungsform weist die Inspektionseinrichtung eine Bildaufnahmeeinrichtung auf. Durch das Auswerten derart aufgenommener Bilder kann in relativ einfacher Weise auf dasjenige Druckaggregat geschlossen werden, welches bestimmte Bestandteile des Bildes, beispielsweise die Rotbestandteile dieses Bildes erzeugt hat.

Bei einer weiteren vorteilhaften Ausführungsform gibt wenigstens ein Druckaggregat eine Farbe aus. Es wird darauf hingewiesen, dass im Rahmen der vorliegenden Beschreibung auch Schwarz und Weiß als Farbe aufgefasst werden. Erfindungsgemäß bringen die beiden Druckaggregate unterschiedliche Farben auf das Behältnis auf.

Erfindungsgemäß weist wenigstens ein Druckaggregat und weisen bevorzugt mehrere Druckaggregate Tintenstrahldruckeinheiten auf. Diese Tintenstrahldruckeinheiten können dabei wiederum eine Vielzahl von Tintenstrahl-Druckköpfen aufweisen. Diese Tintenstrahl-Druckköpfe wiederum können entlang einer vorgegebenen Linie, beispielsweise einer Längsrichtung der Behältnisse nebeneinander angeordnet sein und so ein geschlossenes d.h. lückenloses Bild drucken.

Bei einer weiteren vorteilhaften Ausführungsform weist wenigstens ein Druckaggregat wenigstens ein redundant vorhandenes Druckelement auf. So kann beispielsweise ein bestimmter Druckkopf an einem Druckaggregat zweifach bzw. redundant vorhanden sein, d.h., dass im Arbeitsbetrieb lediglich einer dieser beiden Druckköpfe arbeitet und der andere in einem Ruhemodus ist. Auf diese Weise ist es möglich, bei Ausfall eines Druckkopfes unverzüglich den Druck durch einen weiteren in Redundanz vorhandenen Druckkopf zu ersetzen. Während dieser Zeit wäre es dann möglich, den genannten ersten Druckkopf auszutauschen bzw. zu warten.

Bei einer weiteren vorteilhaften Ausführungsform weist die Vorrichtung ein drittes Druckaggregat auf, welches entlang des Transportpfades der Behältnisse nach dem zweiten Druckaggregat angeordnet ist und welches die bereits mit dem ersten Bildelement und dem zweiten Bildelement bedruckten Behältnisse mit einem dritten Bildelement bedruckt.

In diesem Zusammenhang wird darauf hingewiesen, dass unter einem Bildelement nicht notwendigerweise ein durchgehendes Bild verstanden wird, sondern auch etwa die Aufbringung eines Schriftzuges oder dergleichen als Bildelement aufgefasst wird.

Bei einer weiteren vorteilhaften Ausführungsform weist die Vorrichtung auch ein viertes Druckaggregat auf, welches entlang des Transportpfades der Behältnisse nach dem zweiten bzw. dritten Druckaggregat angeordnet ist und welches die bereits mit den vorangehend beschriebenen Bildelementen bedruckten Behältnisse mit einem vierten Bildelement bedruckt. Daneben könnte die Vorrichtung auch weitere Druckaggregate zum Bedrucken der Behältnisse mit weiteren (Farb-)Komponenten aufweisen. Bei einer weiteren vorteilhaften Ausführungsform weist die Vorrichtung eine Trocknungseinrichtung zum Trocknen der auf die Behältnisse aufgedruckten Bilder bzw. Bildelemente auf.

Bevorzugt weisen wenigstens zwei Druckaggregate entlang des Transportpfades der Kunststoffvorformlinge einen Abstand zueinander auf, der einer Teilung zwischen den transportierten Behältnissen oder einem ganzzahligen Vielfachen dieser Teilung entspricht. Bevorzugt weisen mehrere Druckaggregate einen derartigen Abstand zueinander auf und bevorzugt alle Druckaggregate. Auf diese Weise kann erreicht werden, dass die unterschiedlichen Druckaggregate im Wesentlichen gleichzeitig Drucke auf (jedoch unterschiedlichen) Behältnissen aufbringen.

Vorteilhaft bedrucken dabei wenigstens zwei und bevorzugt wenigstens drei und bevorzugt alle vier Druckelemente wenigstens teilweise den gleichen Oberflächenbereich des Behältnisses.

Bei einer weiteren vorteilhaften Ausführungsform ist wenigstens ein Druckaggregat stationär angeordnet. So wäre es möglich, dass ein, zwei, drei oder auch mehrere Druckaggregate stationär angeordnet sind und die zu bedruckenden Behältnisse an diesen Druckaggregaten vorbeigeführt und während dieses Vorbeiführens mit den unterschiedlichen Farbkomponenten bedruckt werden. Unter einem stationär angeordneten Druckaggregat wird verstanden, dass dieses zwar möglicherweise in bestimmten Grenzen bewegliche Druckköpfe aufweisen kann (etwa, um in geringem Maß eine Bewegung der Behältnisse oder einer zu bedruckenden Wand der Behältnisse zu kompensieren bzw. dieser Bewegung begrenzt zu folgen), jedoch zumindest Bestandteile, wie etwa ein Träger dieses Druckaggregats, stationär angeordnet ist.

Bei einer weiteren vorteilhaften Ausführungsform weist wenigstens ein Druckaggregat eine Vielzahl von Druckelementen auf, welche insbesondere in der Längsrichtung der zu bedruckenden Behältnisse übereinander angeordnet sind.

Bei einer weiteren vorteilhaften Ausführungsform weist die Inspektionseinrichtung eine erste Bildaufnahmeeinrichtung auf, die zur Aufnahme ortsaufgelöster farbiger Bilder geeignet ist. Insbesondere kann es sich hierbei um eine Farbbildkamera handeln. Diese Bildaufnahmeeinrichtung nimmt bevorzugt von den einzelnen Behältnissen jeweils wenigstens ein, bevorzugt mehrere Bilder auf, um diese anschließend einer Auswertung zuzuleiten. Anhand dieser ortsaufgelösten Farbbilder kann eine Vielzahl von Fehlern erkannt und gegebenenfalls so behoben werden.

Auch können die aufgenommenen Bilder bzw. so festgestellten Fehler dem entsprechenden Druckaggregat zugeordnet werden. Bei einer weiteren vorteilhaften Ausführungsform weist die Inspektionseinrichtung eine Vergleichseinrichtung auf, welche von der Bildaufnahmeeinrichtung aufgenommene Bilder mit Referenzbildern vergleicht. Anhand eines derartigen Vergleiches ist die Feststellung von Fehlern möglich. Daneben kann auch eine Anzeigeeinrichtung vorgesehen sein, welche ein Inspektionsergebnis ausgibt und/oder welche Bilder der inspizierten Behältnisse ausgibt. So kann auch über eine Informationsausgabeeinrichtung an den Benutzer eine Information ausgegeben werden, welcher Fehler vorliegt und gegebenenfalls, wie dieser Fehler zu beheben ist.

Bei einer weiteren vorteilhaften Ausführungsform weist die Inspektionseinrichtung eine zweite Bildaufnahmeeinrichtung auf, welche ebenfalls zur Aufnahme ortsaufgelöster Bilder geeignet ist. Vorteilhaft handelt es sich hierbei um eine Bildaufnahmeeinrichtung, welche ebenfalls auch zur Aufnahme von Schwarz-Weiß-Bildern oder Graustufenbildern geeignet ist. Diese zweite Bildaufnahmeeinrichtung kann insbesondere zum Identifizieren eines fehlerhaften Schwarz-Weiß-Druckaggregats dienen.

Bei einer weiteren vorteilhaften Ausführungsform weist die Inspektionseinrichtung eine Beleuchtungseinrichtung auf, welche die Behältnisse - insbesondere zum Zweck deren Inspektion - beleuchtet. Diese Beleuchtungseinrichtung kann dabei direkt den aufgebrachten Druck beleuchten, und die Inspektionseinrichtung wiederum ein Bild dieses so beleuchteten Drucks aufnehmen. Auch wäre eine Inspektion im Durchlichtverfahren denkbar.

Anhand einer Farbbildaufnahme kann - wie oben erwähnt - auf das fehlerhafte Druckaggregat geschlossen werden. Dabei können beispielsweise die Bilder nach in der Druckindustrie bekannten Farbmodellen, wie Hexachrom, kontrolliert werden. Auch ist eine Auswertung nach dem CMYK und einem Weißbildstandard möglich. Vorteilhaft kann nicht nur das entsprechende fehlerhaft arbeitende Druckaggregat identifiziert werden, sondern auch gegebenenfalls ein Druckkopf aus einer Vielzahl von Druckköpfen dieses Druckaggregats. Dabei kann beispielsweise auch eine Relativhöhe in der Längsrichtung der Behältnisse eines fehlerhaften Druckkopfes bestimmt werden, um dieses zu identifizieren.

Vorteilhaft weist wenigstens ein Druckaggregat, und bevorzugt weisen mehrere Druckaggregate und bevorzugt alle Druckaggregate wenigstens zwei und bevorzugt wenigstens drei Druckköpfe auf, die zumindest in der Längsrichtung des Behältnisses versetzt zueinander angeordnet sind.

Bei einer weiteren vorteilhaften Ausführungsform weist auch die Halteeinrichtung für die Behältnisse ein Element, wie insbesondere eine Zentrierglocke, und Greifelemente auf, so dass die Behältnisse in einer exakten Position gegenüber den Druckaggregaten gehalten werden können.

Bei einer weiteren vorteilhaften Ausführungsform weist die Vorrichtung auch eine Zuordnungseinrichtung auf, welche dem Inspektionsergebnis diejenige Halteeinrichtung zuordnet, welche das Behältnis während des Drucks gehalten hat. Eine derartige Zuordnung nicht nur des Druckaggregats sondern auch der betreffenden Halteeinrichtung kann vorteilhaft sein, da bestimmte Fehler auch von fehlerhaften Halteeinrichtungen verursacht sein können, beispielsweise von nicht exakt gehaltenen Behältnissen.

So kann beispielsweise ein schiefgehaltenes Behältnis dazu führen, dass auch der Druck an dem Behältnis nicht ordnungsgemäß, sondern beispielsweise schief bezüglich einer SollPosition angebracht wurde.

Um die Halteeinrichtung zu identifizieren sind mehrere Vorgehensweisen denkbar. So könnten beispielsweise ein oder mehrere Druckaggregate mit dem Druck ein Signal abgeben, welches beispielsweise auch einen Zeitstempel enthält. Aus einem Zeitstempel während der Inspektion kann bei Kenntnis der Maschinengeschwindigkeit auf die Halteeinrichtung geschlossen werden. Auch wäre es möglich, dass zum Zeitpunkt eines Bedruckens eine Maschinenstellung, beispielsweise eine Stellung des Trägers erfasst wird. Aus dieser Stellung kann wiederum auf das Druckaggregat geschlossen werden, welches das gerade bedruckte Behältnis gehalten hat.

Bei einer weiteren vorteilhaften Ausführungsform weist die Vorrichtung eine Steuerungseinrichtung auf, welche wenigstens ein Druckaggregat unter Berücksichtigung des Inspektionsergebnisses steuert. So kann insbesondere eine Regelungseinrichtung vorgesehen sein, welche in der Lage ist, bestimmte Fehler auszuregeln, etwa Fehler wie ein Verschmieren von Drucken, Passergenauigkeit, Registerhaftigkeit und dergleichen. Weiterhin wäre es möglich, dass aufgrund der Inspektion festgestellt wird, dass bestimmte Druckelemente fehlerhaft sind und diese dann, insbesondere wenn sie redundant vorhanden sind (s. o.) durch andere Druckelemente ausgetauscht werden.

In einer besonders bevorzugten Ausführungsform kann beim Identifizieren einer defekten Druckfarbe oder Druckkopfes (in vertikaler Richtung) auf ein alternatives Druckdesign umgeschaltet werden. Dieses Druckdesign verwendet dann die als fehlerhaft identifizierte Farbe oder den Ort nicht, sondern nutzt bewusst ein anderes Design. Im Falle einer fehlerhaften Halteeinrichtung ist ebenso ein Stilllegen oder nicht beschicken der Halteeinrichtung möglich.

Weiterhin ist es möglich, die Behälter die durch eine nicht ordnungsgemäß funktionierende Halteeinrichtung transportiert werden nicht zu behandeln und anstelle dessen, die nicht bedruckten Behälter auf ein getrenntes Ausleitband zu einer konventionell arbeitenden Etikettiermaschine zu führen.

Bei einer weiteren vorteilhaften Ausführungsform ist auch eine Statistikeinheit vorgesehen, welche die Inspektionsergebnisse statistisch auswertet. So kann beispielsweise das Auftreten bestimmter Fehler bei bestimmten Druckaggregaten statistisch ausgewertet werden. So kann beispielsweise festgestellt werden, wie häufig ein bestimmtes blaue Farbe ausgebendes Druckaggregat einen bestimmten Fehler verursacht. Auch können die Fehlerhäufigkeiten mehreren Druckaggregaten zugeordnet werden und/oder auch mehreren Halteeinrichtungen.

Falls beispielsweise festgestellt wird, dass ein bestimmter Fehler immer nur bei dem Bedrucken eines Behältnisses auftritt, welches von der 17. Halteeinrichtung gehalten wird, lässt sich hieraus ableiten, dass ggfs. nicht das Druckaggregat fehlerhaft ist, sondern der Fehler bei der Halteeinrichtung liegt. In diesem Falle können geeignete Gegenmaßnahmen eingeleitet werden.

Die vorliegende Erfindung ist weiterhin auf ein Verfahren zum Bedrucken von Behältnissen gerichtet. Dabei werden die Behältnisse mittels einer Transporteinrichtung entlang eines vorgegebenen Transportpfads transportiert und die Behältnisse werden sowohl mittels eines ersten Druckaggregats als auch mittels eines zweiten Druckaggregats bedruckt. Erfindungsgemäß werden mittels einer den Druckaggregaten nachgeordneten Inspektionseinrichtung die Behältnisse inspiziert, wobei die inspizierten Behältnisse und oder ein Inspektionsergebnis mindestens einem Druckaggregat, welches dieses Behältnis bedruckt hat, zugeordnet wird.

Es wird daher auch verfahrensseitig vorgeschlagen, dass Inspektionsergebnisse bestimmten Druckaggregaten zugeordnet werden. Auf diese Weise kann leichter bzw. in gezielter Weise eine Gegenmaßnahme bei Auftreten bestimmter Fehler getroffen werden. Vorteilhaft werden durch die aufeinanderfolgenden Druckaggregate wenigstens teilweise die gleichen Bereiche eines Behältnisses bedruckt. Wie oben erwähnt, können bevorzugt durch die Druckaggregate verschiedene Farbkomponenten eines Bildes aufgedruckt werden.

Bei einem weiteren bevorzugten Verfahren wird auch eine Information mitgeführt, welches Druckaggregat das jeweilige Behältnis bedruckt hat. Bevorzugt wird auch eine Information aufgenommen bzw. mitgeführt, welche die Halteeinrichtung, welche das bedruckte Behältnis gehalten hat, feststellt. Dies erlaubt eine Zuordnung nicht nur eines fehlerhaften Druckaggregats sondern auch einer Halteeinrichtung, welche das betreffende fehlerhafte bedruckte Behältnis gehalten hat.

Vorteilhaft ist die Inspektionseinrichtung stromabwärts bezüglich der Transporteinrichtung, welche die Behältnisse während des Bedruckens führt, angeordnet.

Bevorzugt transportiert die Transporteinrichtung die Behältnisse entlang eines kreisförmigen Pfades. Bei einem weiteren vorteilhaften Verfahren gibt die Inspektionsergebniseinrichtung wenigstens eine Fehlerinformation hinsichtlich eines aufgebrachten Druckes aus. Bevorzugt wird wenigstens eine Information ausgegeben, welche für das Auftreten eines bestimmten Druckfehlers charakteristisch ist. Auch wäre es möglich, dass eine Information ausgegeben wird, welche einen Rückschluss auf den entsprechenden Fehler ermöglicht.

Bei einem weiteren vorteilhaften Verfahren, ist der Druckfehler aus einer Gruppe von Druckfehlern ausgewählt, welcher eine fehlerhafte Spreitung einer Druckflüssigkeit auf dem Behältnis, eine fehlerhafte Positionierung des ersten Bildelements gegenüber einem Behältnis, eine fehlerhafte Positionierung eines ersten in einem bestimmten Bereich des Behältnisses aufgebrachten Bildelements bezüglich eines zweiten in diesem bestimmten Bereich des Behältnis aufgebrachten Druckelements, ein Verschmieren wenigstens eines Bildelements, einen Ausfall wenigstens eines Düsenelements bzw. Druckelements wenigstens eines Druckaggregats, eine fehlerhafte Lage wenigstens eines Bildelements bezüglich des Behältnisses und oder einen farblichen Fehler des Bildelements oder Kombinationen hieraus erhält. Unter der Spreitung versteht man die Ausbreitung und flächige Verteilung von Flüssigkeiten auf Oberflächen hier insbesondere die Ausbreitung von Drucktinte (insbesondere auf einer Kunststoffoberfläche).

Im Rahmen dieses vorteilhaften Verfahrens wird vorgeschlagen, einzelne Fehler zu kategorisieren, damit auf diese Weise in besonders einfacher Weise Gegenmaßnahmen ergriffen werden können. Derartige Fehler können, wie oben erwähnt, insbesondere durch eine Bildaufnahme der jeweiligen Behältnisse bzw. deren Aufdrucke ermittelt werden.

Bei einem weiteren bevorzugten Verfahren wird einem festgestellten Druckfehler eine Fehlerursache wenigstens eines Druckaggregats zugeordnet. So kann beispielsweise als Fehler festgestellt werden, dass die rote Komponente des Aufdrucks Linien aufweist und hieraus kann wiederum geschlossen werden, dass die Druckelemente, beispielsweise die Druckdüsen des die rote Farbe spendenden Druckaggregats fehlerhaft sind.

Bei einem bevorzugten Verfahren nimmt die Inspektionseinrichtung wenigstens ein Bild des zu inspizierenden Behältnisses auf. Dabei erfasst bevorzugt die Inspektionseinrichtung das Behältnis berührungslos. Vorteilhaft nimmt die Inspektionseinrichtung mehrere Bilder des Behältnisses auf. Vorteilhaft können dabei sowohl Farbbilder als auch Schwarzweiß-Bilder aufgenommen werden.

Bei einem weiteren bevorzugten Verfahren gibt die Inspektionseinrichtung wenigstens ein Ergebnis aus, welches für den Druck des Behältnisses charakteristisch ist. So kann beispielsweise als Ergebnis eine Spreitung des Drucks ausgegeben werden, wobei bevorzugt auch noch ausgegeben wird, welches Druckaggregat diesen Fehler verursacht hat.

Bei dem erfindungsgemäßen Verfahren werden die Behältnisse von der Transporteinrichtung mittels einer Vielzahl von Halteeinrichtungen transportiert und das Inspektionsergebnis wird derjenigen Halteeinrichtung, welche das inspizierte Behältnis bei Aufbringung des betreffenden Bildelements gehalten hatte zugeordnet. Bei diesem Verfahren wird also nicht nur ein Druckaggregat identifiziert, sondern es wird auch identifiziert, welche Halteeinrichtung das entsprechende Behältnis währen des Druckes gehalten hatte. Auf diese Weise können auch ggfs. fehlerhafte Halteeinrichtungen identifiziert werden.

Bei einem weiteren bevorzugten Verfahren wird wenigstens ein Druckaggregat und bevorzugt mehrere Druckaggregate unter Verwendung eines Inspektionsergebnisses gesteuert. So kann beispielsweise - bevorzugt vollautomatisch - in Reaktion auf einen bestimmten erfassten Fehler eine Korrektur an dem entsprechenden Druckaggregat eingeleitet werden, beispielsweise anstelle eines bestimmten Druckkopfes ein redundant vorhandener weiterer Druckkopf eingesetzt werden.

Bei einem weiteren bevorzugten Verfahren werden bestimmte Behältnisse und insbesondere als fehlerhaft bedruckte Behältnisse nach der Inspektionseinrichtung ausgeschleust, so dass sie nicht zu einer weiteren Verarbeitung gelangen. Bei dieser Ausgestaltung kann beispielsweise die Inspektionseinrichtung ein Signal an eine weitere Auswurfeinheit, wie etwa einen Pusher, geben und dieser kann als fehlerhaft detektierte Behältnisse aus dem Behältnisstrom ausschleusen.

Bei einem weiteren vorteilhaften Verfahren wird eine Vielzahl von Inspektionsergebnissen im Hinblick auf wenigstens einen Druckfehler ausgewertet. So kann beispielsweise für eine Vielzahl von Behältnissen überprüft werden, ob die entsprechenden Drucke einen bestimmten Fehler aufweisen. Auch kann ein Verlauf dieses Fehlers betrachtet werden. Weiterhin ist es möglich, dass hinsichtlich eines gewissen Kriteriums Toleranzgrenzen definiert werden. Solange die inspizierten Behältnisse innerhalb dieser Toleranzkriterien liegen, wird ein Behältnis noch als ordnungsgemäß deklariert, sobald inspizierte Ergebnisse außerhalb dieser Grenzen liegen, können Fehlermeldungen ausgegeben werden.

Daneben wäre es auch möglich, einen Verlauf bestimmter Inspektionsergebnisse bzw. von Messwerten zu bilden. So kann beispielsweise überprüft werden, ob ein bestimmter Fehler wiederholt auftritt und sich ggfs. sogar erhöht, beispielsweise ob ein Wegdriften von bestimmten Sollwerten gegeben ist.

Durch diese Auswertung der Fehler kann auch geprüft werden, ob ein bestimmter Fehler auf ein bestimmtes Druckaggregat zurückzuführen ist oder ggfs. auf eine entsprechende Halteeinrichtung. Bei einem weiteren vorteilhaften Verfahren wird wenigstens ein Druckaggregat unter Verwendung des Inspektionsergebnisses geregelt. So können beispielsweise die Druckköpfe eines bestimmten Druckaggregats unter Berücksichtigung des Inspektionsergebnisses gesteuert werden. Daher wäre es beispielsweise möglich, dass ein Bild eines Behältnisses aufgenommen wird, anschließend eine Justierung eines Druckaggregats erfolgt, anschließend erneut ein entsprechendes Behältnis inspiziert wird und eine weitere Justage vorgenommen wird. So kann insbesondere eine interaktive Justage der Druckköpfe vorgenommen werden. Auch kann auf diese Weise eine Anpassung von Druckvorlagen erfolgen.

Mit anderen Worten können die Druckaggregate mittels des Inspektionsergebnisses eingeregelt werden.

Bei einer weiteren vorteilhaften Ausführungsform ist ein Einlernbetrieb vorgesehen, währenddessen die einzelnen Druckaggregate - bevorzugt automatisch - aufeinander eingestellt werden. So könnte beispielsweise ein bestimmtes Behältnis zunächst alle Druckaggregate durchlaufen und anschließend von der Inspektionseinrichtung inspiziert werden. Die Inspektionseinrichtung kann an die Steuerungen der einzelnen Druckaggregate Befehle über bestimmte Änderungen vorgeben, beispielsweise für bestimmte Positionsänderungen. Nachdem eine Anpassung der Druckköpfe vorgenommen wurde, kann erneut ein Behältnis bedruckt und wiederum inspiziert werden. Auf Basis dieses zweiten Inspektionsergebnisses kann eine weitere Anpassung der Druckaggregate erfolgen. Auf diese Weise kann schließlich eine vollständige Justage der einzelnen Druckaggregate selbst und auch der Druckaggregate bezüglich einander erfolgen.

Bei einem weiteren bevorzugten Verfahren werden die Behältnisse nach ihrem Bedrucken noch nachbehandelt, beispielsweise temperiert. So wäre es möglich, dass beispielsweise ein Aufgebrachter Druck getrocknet wird. Dies kann beispielsweise durch Beaufschlagung mittels UV-Licht erfolgen.

Dabei ist es weiterhin möglich, dass mittels der Inspektionseinrichtung auch fehlerhafte Trocknungsvorgänge erfasst werden, etwa anhand eines zumindest teilweise verschmierten Bildes.

Weiterhin wäre es auch möglich, dass an den Benutzer Warnhinweise gegeben werden, insbesondere wenn vorgegebene Toleranzgrenzen überschritten werden. Auch können andere Maßnahmen eingeleitet werden, bis hin zu einem Maschinenstopp.

Weitere Vorteile und Ausführungsformen ergeben sich aus den beigefügten Zeichnungen. Darin zeigen:
- Fig. 1: eine schematische Darstellung einer erfindungsgemäßen Vorrichtung zum Bedrucken von Behältnissen und
- Fig. 2: eine Darstellung zur Veranschaulichung einer Auswertung der Druckqualität.

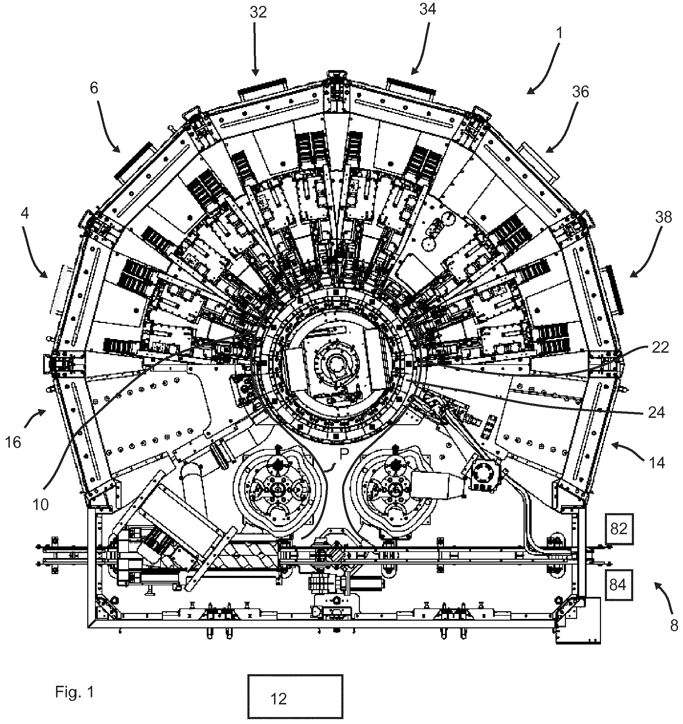

Figur 1 zeigt eine schematische Darstellung einer erfindungsgemäßen Vorrichtung zum Bedrucken von Behältnissen. Dabei werden Behältnisse 10 hier entlang eines kreisförmigen Transportpfades von Halteelementen 22 transportiert. Diese Halteelemente 22 sind an einem nicht im Detail dargestellten drehbaren Träger angeordnet. Die Halteelemente weisen hier bevorzugt auch Drehteller auf, welche die Behältnisse auch während des Bedruckens drehen können, so dass es auch denkbar ist, dass ein vollumfänglicher Druck auf dem Behältnis angebracht wird. Weiterhin können die Halteelemente auch Zentrierelemente wie etwa Zentrierglocken aufweisen so dass die Behältnisse zwischen diese Drehteller und die Zentrierglocken eingespannt werden können. Daneben können die Halteelemente auch Markierungen aufweisen, welche eine Identifizierung des jeweiligen Halteelements erlauben.

Dabei wäre es denkbar, dass die Transporteinrichtung die Behältnisse kontinuierlich an den einzelnen Druckaggregaten vorbeiführt. Es wäre jedoch auch ein getakteter Transport der Behältnisse denkbar, bei denen beispielsweise jeweils angehalten werden kann, wenn sich die Behältnisse an dem jeweiligen Druckelement befinden und in dieser Position der Druck aufgebracht wird. Bevorzugt handelt es sich bei den Behältnissen um Kunststoffbehältnisse oder um Glasbehältnisse und insbesondere um Kunststoffflaschen oder um Glasflaschen.

Während dieses Transports durchlaufen bzw. passieren die Behältnisse 10 eine Vielzahl von Aggregaten 16, 4, 6, 32, 34, 36 und 38, in denen jeweils unterschiedliche Behandlungsschritte an den Behältnissen vorgenommen werden. Bei dem Aggregat 16 handelt es sich hier bevorzugt um eine Überwachungs- und Antistatikeinheit, d.h. in dieser Station ist es möglich, dass überprüft wird, ob die Behältnisse beispielsweise statische Ladungsträger aufweisen. Derartige statische Ladungsträger könnten bei dem Druck hinderlich sein. Damit könnten durch die Station 16 derartige statische Ladungsträger entfernt werden. Das Bezugszeichen P bezieht sich auf den (nur teilweise dargestellten) Transportpfad der Behältnisse durch die Vorrichtung. Dabei ist es möglich, dass eine Teilung zwischen den einzelnen Behältnissen vor Erreichen der einzelnen Druckaggregate erhöht wird.

Das Bezugszeichen 4 bezieht sich auf ein erstes Druckaggregat, welches hier beispielsweise einen gelben Druck an dem Behältnis 10 bzw. einem bestimmten Bereich des Behältnisses 10 anbringt. Das Bezugszeichen 6 bezieht sich auf ein in der Transportrichtung der Behältnisse 10 stromabwärts nach dem ersten Aggregat 4 angeordnetes zweites Druckaggregat, welches eine zweite Farbkomponente, beispielsweise Magenta, auf den Behältnissen anbringt, und zwar bevorzugt auf den gleichen Bereich wie auch bereits die gelbe Farbkomponente aufgebracht wurde. Das Bezugszeichen 32 kennzeichnet ein drittes Druckaggregat, welches eine dritte Komponente eines Farbdrucks aufbringt, hier beispielsweise die Farbkomponente Cyan.

Anschließend werden die Behältnisse an einem weiteren Druckaggregat 34 vorbeigeführt, welches beispielsweise schwarze Farbe bzw. eine schwarze Komponente und insbesondere einen vorderen Druck aufbringt.

Das Bezugszeichen 36 kennzeichnet ein weiteres Druckaggregat, welches beispielsweise eine weiße Druckkomponente auf einer hinteren Seite des Behältnisses aufbringen kann. Das Druckaggregat 38 kann schließlich eine schwarze Komponente ebenfalls auf der Hinterseite des Behältnisses anbringen.

Das Bezugszeichen 14 schließlich kennzeichnet eine Trocknungseinheit, welche dazu dient, die Drucke auf den Behältnisoberflächen zu trocknen. Vorzugsweist weist diese Trocknungseinheit 14 ein UV-Strahlungselement auf, welches die Behältnisse mit UV-Licht zu deren Trocknung bestrahlt.

Stromabwärts der einzelnen Druckaggregate befindet sich die in ihrer Gesamtheit mit 8 bezeichnete Inspektionseinrichtung. Diese weist hier eine erste Kamera 82 auf, welche zur Aufnahme von Farbbildern geeignet ist und welche damit insbesondere die Farbdrucke untersucht. Das Bezugszeichen 84 kennzeichnet eine zweite Kameraeinrichtung, bei der es sich insbesondere um eine Schwarz-Weiß-Bildkamera handelt, die entsprechend geeignet ist, hier die Arbeit der Druckaggregate 34, 36 und 38 zu überprüfen. Diese beiden Bildaufnahmeeinrichtungen können dabei auf unterschiedlichen Seiten des Transportpfads der Behältnisse angeordnet sein.

Das Bezugszeichen 12 kennzeichnet grob schematisch eine Zuordnungseinrichtung, welche einem von der Inspektionseinrichtung 8 aufgenommenen Inspektionsergebnis wenigstens ein Druckaggregat zuordnet. Daneben können diesem Inspektionsergebnis auch mehrere Druckaggregate zugeordnet werden. Bei diesem Inspektionsergebnis kann es sich beispielsweise um einen Fehlerzustand eines aufgedruckten Bildes handeln. Dabei ist die Zuordnungseinrichtung insbesondere in der Lage, nicht nur dasjenige Aggregat zuzuordnen, welches den Fehler verursacht hat. Bevorzugt kann vielmehr auch eine Information darüber ausgegeben werden, wie dieser Fehler behoben werden kann. Weiterhin kann die Zuordnungseinrichtung auch andere fehlerhafte Aggregate zuordnen, wie etwa die oben erwähnte Antistatikeinheit 16. Daneben kann bestimmten Fehlern auch ein Fehlverhalten der Trocknungseinrichtung zugeordnet werden.

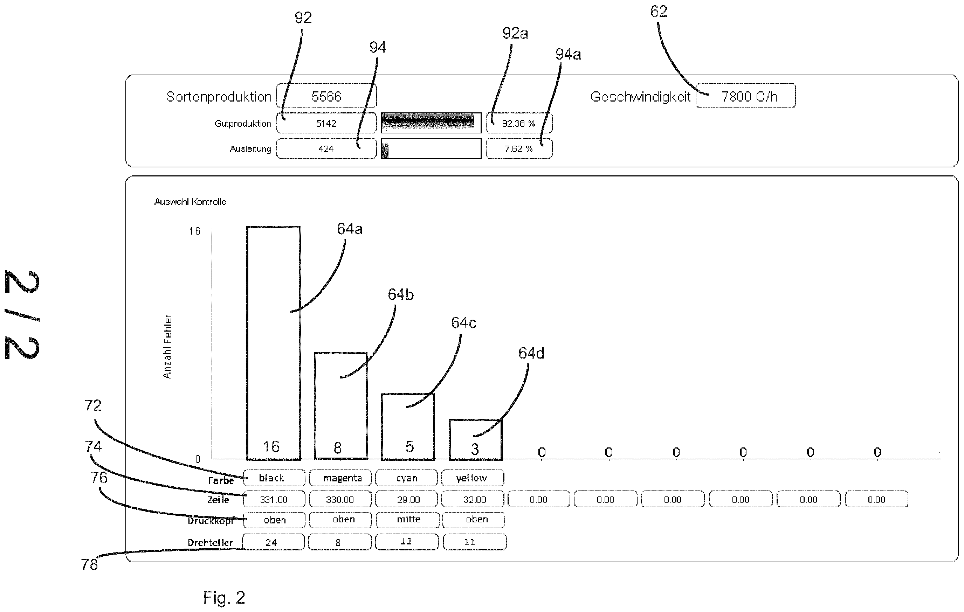

Figur 2 zeigt eine mögliche Darstellung zur Auswertung von Druckergebnissen. Zu diesem Zweck kann die Vorrichtung eine Anzeigeeinrichtung wie ein Display aufweisen. Neben den Fig. 2 gezeigten Angaben kann auch jeweils ein Bild der Behältnisse 10 bzw. deren bedruckter Bereiche ausgegeben werden. Dabei kann auch bereits für den Benutzer das Auftreten von Fehlern visualisiert werden, etwa in dem bildlich dargestellt wird, wo sich ein bestimmter (ggfs. auf dem Bild nicht sofort erkennbarer) Fehler befindet.

Dabei kann durch den Benutzer zunächst vorgegeben werden, welche der oben genannten Druckaggregate überprüft werden sollen. Anhand der Ergebnisse der Bildaufnahmeeinrichtungen 82 und 84 können anschließend die Fehlerhäufigkeiten ausgewählt werden. Das Bezugszeichen 72 kennzeichnet dabei die Angabe, welche Farbkomponente (gelb, magenta, cyan, schwarz, weiß) ausgewertet wurde, wobei dies wiederum einen Rückschluss auf das entsprechende Druckaggregat ermöglicht. Sollte beispielsweise wie in Figur 2 gezeigt die Farbkomponente Magenta sein, so bedeutet dies, dass entsprechend das Druckaggregat 6 überprüft wird.

Die Darstellungselemente 64a - 64d geben Fehlerhäufigkeiten an, mit denen ein bestimmter Fehler auftritt. So tritt hier beispielsweise ein Fehler in der Schwarz-Komponente mit einer Anzahl von 16 Fehlern auf.

Mittels eines weiteren Darstellungselementes 74 kann auch angegeben werden, wo ein bestimmter Fehler auftritt, beispielsweise in welcher bestimmten Druckzeile. Anhand dieser Druckzeile kann überprüft werden, welches Druckelement mit hoher Wahrscheinlichkeit fehlerhaft ist. Damit erfolgt bevorzugt auch die Auswertung eines von der Bildaufnahmeeinrichtung 82 und/oder 84 aufgenommenen Bildes ortsaufgelöst, beispielsweise nach Bildzeilen aufgelöst.

Das Darstellungselement 76 gibt zusätzlich an, welcher Druckkopf eines bestimmten Aggregats fehlerhaft ist bzw. den Fehler verursacht hat. In dem dargestellten Beispielfall wäre möglicherweise der obere Druckkopf fehlerhaft. Eine entsprechende Reaktion könnte sein, dass dieser obere Druckkopf eingewechselt wird.

Über das Darstellungselement 78 kann ferner angegeben werden, welcher Drehteller bzw. welche Halteeinrichtung die Behältnisse bei Auftreten des Fehlers gehalten hat. Falls beispielsweise mit einer besonders hohen Fehlerhäufigkeit der Drehteller bzw. die Halteeinrichtung Nr. 24, wie in Figur 2 gezeigt, Ausfälle zeigt, so kann auf eine entsprechende fehlerhafte Halteeinrichtung geschlossen werden.

Damit können auch Fehlerhäufigkeiten in Abhängigkeit von mehreren Kriterien ausgegeben werden, insbesondere in Abhängigkeit von der Farbe (d.h. des Druckaggregats), des Drehtellers bzw. der Halteeinrichtung, der Dot-Zeile oder des jeweiligen Druckkopfes.

So sind unterschiedliche Arten der Auswertung denkbar. So könnte beispielsweise festgestellt werden, wie viele Behältnisse von dem ersten Druckaggregat falsch bedruckt wurden. Dabei kann wiederum festgestellt werden, von welchen Halteelementen diese als fehlerhaft erkannten Behältnisse beim Bedrucken gehalten werden. Auch kann festgestellt werden, welches Druckelement z.B. welcher Druckkopf des ersten Druckaggregats den Fehler verursacht hat.

Auch könnte eine Prozessoreinrichtung selbsttätig die Fehlerursache bestimmen. Falls beispielsweise in einem ersten Schritt festgestellt wird, dass ein Bild fehlerhaft ist, könnte zunächst festgestellt werden, welchem Druckaggregat und/oder welcher Halteeinrichtung dieser Fehler zugeordnet werden kann. Fall beispielsweise ein bestimmter Fehler zwar mehreren Druckaggregaten aber nur einem bestimmten Halteelement zugeordnet wird, ist dies ein Indiz dafür, dass (nur) dieses Halteelement fehlerhaft ist.

Daneben kann auch eine Gesamtstatistik ausgegeben werden, d.h. es kann angegeben werden, wie hoch der Anteil der ausgeleiteten Behältnisse im Verhältnis zur Gesamtproduktion und auch im Verhältnis zu den nicht ausgeleiteten Behältnissen beträgt. Das Darstellungselement 94 gibt hier beispielsweise an, dass 424 Behältnisse ausgeleitet wurden und 5162 Behältnisse (Ausgabeelement 92) für gut befunden wurden. Über die Angaben 92a und 94a können auch entsprechende prozentuale Angaben getätigt werden. Das Anzeigeelement 62 gibt schließlich eine Angabe über die Gesamtproduktionsgeschwindigkeit aus. Weiterhin wäre es auch möglich, Grenzwerte zu definieren, d.h. Grenzfehlerhäufigkeiten, ab denen weitere Maßnahmen ergriffen werden, wie beispielsweise ein Abschalten der Maschine zur Reparaturzwecken. Weiterhin können auch Warnschwellen definiert werden, welche angeben, dass bei einer zu hohen Ausleitung von fehlerhaften Behältnissen bestimmte Gegenmaßnahmen eingeleitet werden müssen, wie beispielsweise ein Austausch bestimmter Druckköpfe.

Insgesamt findet daher bei einer bevorzugten Verfahren eine Zuordnung der Fehlerhäufigkeit zumindest zu zwei Kriterien statt, wobei diese Kriterien ausgewählt sind aus einer Farbe des Drucks, einer Angabe der Halteeinrichtung, einer Dot-Zeile oder eines Druckkopfes eines oder mehrerer bestimmter Druckaggregate.

### Bezugszeichenliste

- 4: Erstes Druckaggregat
- 6: Zweites Druckaggregat
- 8: Inspektionseinrichtung
- 10: Behältnisse
- 12: Zuordnungseinrichtung
- 14: Trocknungseinheit
- 22: Halteelemente, Halteeinrichtungen
- 24: Träger
- 32: Drittes Druckaggregat
- 34, 36, 38: Druckaggregat
- 62: Anzeigeelement
- 64a, b, c, d: Darstellungselement
- 72, 74, 76, 78: Darstellungselement
- 82: Bildaufnahmeeinrichtung, Ausgabeelement
- 84: Bildaufnahmeeinrichtung
- 92, 94: Ausgabeelement
- 92a, 94a: Angaben
- P: Transportpfad

## Patentansprüche

1. Vorrichtung (1) zum Bedrucken von Behältnissen (10) mit einer Transporteinrichtung (2), welche die zu bedruckenden Behältnisse (10) entlang eines vorgegebenen Transportpfads (P) transportiert, wobei die Transporteinrichtung (2) einen Träger (24) und eine Vielzahl von an diesem Träger (24) angeordneten Halteeinrichtungen (22) zum Halten der zu bedruckenden Behältnisse (10) aufweist, derart, dass die zu bedruckenden Behältnisse (10) vereinzelt transportierbar sind, mit einem ersten Druckaggregat (4), welches die Behältnisse mit einem vorgegebenen Bildelement bedruckt, mit einem zweiten Druckaggregat (6), welches entlang des Transportpfades (P) der Behältnisse nach dem ersten Druckaggregat (4) angeordnet ist und welches die bereits mit dem ersten Druckelement bedruckten Behältnisse (10) mit einem zweiten Bildelement bedruckt,
**dadurch gekennzeichnet, dass**
die Vorrichtung (1) eine in der Transportrichtung der Behältnisse den Druckaggregaten (4, 6) nachgeordnete Inspektionseinrichtung (8) aufweist, welche den auf den Behältnissen angeordneten Druck inspiziert sowie eine Zuordnungseinrichtung (12), welche ein Inspektionsergebnis der Inspektionseinrichtung (8) den Druckaggregaten (4, 6) zuordnet und welche dem Inspektionsergebnis diejenige Halteeinrichtung (22) zuordnet, welche das inspizierte Behältnis (10) während des Drucks gehalten hat, wobei die beiden Druckaggregate dazu geeignet und bestimmt sind, unterschiedliche Farben auf das Behältnis aufzubringen, wobei wenigstens ein Druckaggregat (4, 6) ein Tintenstrahl-Druckaggregat ist, wobei bereits durch die Auswertung der jeweiligen Farbe festgestellt werden kann, welches Druckaggregat diesen Druck aufgebracht hatte.

2. Vorrichtung nach dem vorangegangen Anspruch,
**dadurch gekennzeichnet, dass**
die Vorrichtung ein drittes Druckaggregat (12) aufweist, welches entlang des Transportpfades (P) der Behältnisse nach dem zweiten Druckaggregat (4) angeordnet ist und welches die bereits mit dem ersten Druckelement und dem zweiten Druckelement bedruckten Behältnisse mit einem dritten Bildelement bedruckt.

3. Vorrichtung nach wenigstens einem der vorangegangenen Ansprüche,
**dadurch gekennzeichnet, dass**
wenigstens ein Druckaggregat (4, 6) stationär angeordnet ist.

4. Vorrichtung nach wenigstens einem der vorangegangenen Ansprüche,
**dadurch gekennzeichnet, dass**
die Inspektionseinrichtung (8) eine erste Bildaufnahmeeinrichtung (82) aufweist, die zur Aufnahme ortsaufgelöster, farbiger Bilder geeignet ist.

5. Vorrichtung (1) nach Anspruch 4,
**dadurch gekennzeichnet, dass**
die Inspektionseinrichtung (8) eine zweite Bildaufnahmeeinrichtung (84) aufweist, die zur Aufnahme ortsaufgelöster Bilder geeignet ist.

6. Vorrichtung nach wenigstens einem der vorangegangenen Ansprüche,
**dadurch gekennzeichnet, dass**
die Vorrichtung eine Steuerungseinrichtung aufweist, welche wenigstens ein Druckaggregat unter Berücksichtigung des Inspektionsergebnisses steuert.

7. Verfahren zum Bedrucken von Behältnissen, wobei die Behältnisse (10) mittels einer Transporteinrichtung (2) entlang eines vorgegebenen Transportpfads (P) transportiert werden und wobei die Behältnisse (10) sowohl mittels eines ersten Druckaggregats (4) als auch mittels eines zweiten Druckaggregats (6) bedruckt werden, wobei die beiden Druckaggregate unterschiedliche Farben auf das Behältnis aufbringen, wobei wenigstens ein Druckaggregat (4, 6) ein Tintenstrahl-Druckaggregat ist,
wobei mittels einer den Druckaggregaten (4, 6) nachgeordneten Inspektionseinrichtung (8) die Behältnisse inspiziert werden, **dadurch gekennzeichnet, dass** die inspizierten Behältnisse und/oder ein Inspektionsergebnis wenigstens einem Druckaggregat (4, 6), welches dieses Behältnis bedruckt hat, zugeordnet wird, und die Transporteinrichtung (2) die Behältnisse (10) mittels einer Vielzahl von Halteeinrichtungen (22) transportiert und das Inspektionsergebnis derjenigen Halteeinrichtung zugeordnet wird, welche das inspizierte Behältnis bei Aufbringung der Druckelemente gehalten hatte, wobei bereits durch die Auswertung der jeweiligen Farbe festgestellt werden kann, welches Druckaggregat diesen Druck aufgebracht hatte.

8. Verfahren nach Anspruch 7,
**dadurch gekennzeichnet, dass**
Inspektionseinrichtung (8) wenigstens eine Information ausgibt, welche für das Auftreten eines bestimmten Druckfehlers charakteristisch ist.

9. Verfahren nach Anspruch 8,
**dadurch gekennzeichnet, dass**
der Druckfehler aus einer Gruppe von Druckfehlern ausgewählt ist, welche eine fehlerhafte Spreitung einer Druckflüssigkeit auf dem Behältnis, eine fehlerhafte Positionierung eines ersten Druckelements gegenüber einem zweiten Druckelement, eine fehlerhafte Positionierung eines ersten in einem bestimmten Bereich des Behältnisses aufgebrachten Druckelements bezüglich eines zweiten in diesem bestimmten Bereich des Behältnisses aufgebrachten Druckelements, ein Verschmieren wenigstens eines Druckelements, einen Ausfall wenigstens eines Düsenelements wenigstens eines Druckaggregats, eine fehlerhafte Lage wenigstens eines Druckelements bezüglich des Behältnisses, einen farblichen Fehler des Druckelements, Kombinationen hieraus oder dergleichen enthält.

10. Verfahren nach Anspruch 8,
**dadurch gekennzeichnet, dass**
einem festgestellten Druckfehler eine Fehlerursache wenigstens eines Druckaggregats zugeordnet wird.

11. Verfahren nach Anspruch 7,
**dadurch gekennzeichnet, dass**
die Inspektionseinrichtung (8) wenigstens ein Bild des zu inspizierenden Behältnisses aufnimmt.

12. Verfahren nach wenigstens einem der vorangegangenen Ansprüche,
**dadurch gekennzeichnet, dass**
eine Vielzahl von Inspektionsergebnissen im Hinblick auf wenigstens einen Druckfehler ausgewertet wird.

## Claims

1. An apparatus (1) for printing onto containers (10), comprising a transport device (2) that transports the containers (10) to be printed along a specified transport path (P), wherein the transport device (2) includes a carrier (24) and a plurality of holding devices (22) provided on said carrier (24) for holding the containers (10) to be printed in such a way that the containers (10) to be printed can be transported in an individualised manner, comprising a first printing unit (4) that prints a specified image element onto the containers, comprising a second printing unit (6) that is provided along the transport path (P) of the containers after the first printing unit (4) and prints a second image element onto the containers (10) already printed with the first printing element,
**characterised in that**
the apparatus (1) includes an inspection device (8) provided downstream of the printing units (4, 6) in the transport direction of the containers, which inspection device inspects the print provided on the containers, as well as an association device (12) that associates an inspection result of the inspection device (8) with the printing units (4, 6) and which associates the inspection result with the holding device (22) that held the inspected container (10) during the printing operation, wherein both printing units are suitable and intended to apply different colours onto the container, wherein at least one printing unit (4, 6) is an inkjet printing unit, wherein already by the evaluation of the respective colour it can be determined which printing unit has applied this print.

2. The apparatus as claimed in the preceding claim,
**characterised in that**
the apparatus includes a third printing unit (12) that is provided after the second printing unit (4) along the transport path (P) of the containers and prints a third image element onto the containers already printed with the first printing element and the second printing element.

3. The apparatus as claimed in at least one of the preceding claims,
**characterised in that**
at least one printing unit (4, 6) is mounted to be stationary.

4. The apparatus as claimed in at least one of the preceding claims,
**characterised in that**
the inspection device (8) has a first image capturing device (82) that is suitable for capturing spatially resolved colour images.

5. The apparatus (1) as claimed in claim 4,
**characterised in that**
the inspection device (8) has a second image capturing device (84) suitable for capturing spatially resolved images.

6. The apparatus as claimed in at least one of the preceding claims,
**characterised in that**
the apparatus has a control unit that controls at least one printing unit under consideration of the inspection result.

7. A method for printing containers, wherein the containers (10) are transported by a transport device (2) along a specified transport path (P), and wherein the containers (10) are printed both by means of a first printing unit (4) and by means of a second printing unit (6), wherein both printing units apply different colours onto the container, wherein at least one printing unit (4, 6) is an inkjet-printing unit, wherein by means of an inspection device (8) which is arranged downstream of the printing units (4, 6) the containers are inspected,
**characterised in that**,
the inspected containers and/or an inspection result is associated with at least one printing unit (4, 6) that printed this container, and the transport device (2) transports the containers (10) by means of a plurality of holding device (22) and the inspection result is associated with the holding device which held the inspected container during the application of the printing elements, wherein already by the evaluation of the respective colour it can be determined which printing unit has applied this print.

8. The method as claimed in claim 7,
**characterised in that**
the inspection device (8) outputs at least one piece of information that is characteristic of the occurrence of a certain printing error.

9. The method as claimed in claim 8,
**characterised in that**
the printing error is selected from a group of printing errors that includes a faulty spread of a printing liquid on the container, a faulty position of a first printing element relative to a second printing element, a faulty position of a first printing element applied to a certain region of the container in respect of a second printing element applied to this particular region of the container, smudging of at least one printing element, a failure of at least one nozzle element of at least one printing unit, a faulty location of at least one printing element in relation to the container, a colour error of the printing element, combinations thereof and the like.

10. The method as claimed in claim 8,
**characterised in that**
a determined printing error is associated with an error cause of at least one printing unit.

11. The method as claimed in claim 7,
**characterised in that**
the inspection device (8) captures at least one image of the container to be inspected.

12. The method as claimed in at least one of the preceding claims,
**characterised in that**
a plurality of inspection results is evaluated in respect of at least one printing error.

## Revendications

1. Dispositif (1) d'impression de contenants (10) avec un dispositif de transport (2) qui transporte les contenants (10) à imprimer le long d'un chemin de transport (P) prédéterminé, le dispositif de transport (2) présentant un support (24) et une pluralité de dispositifs de maintien (22) disposés sur le support (24) pour maintenir les contenants (10) à imprimer de telle façon que les contenants (10) à imprimer peuvent être transportés individuellement, avec une première unité d'impression (4) qui imprime un élément d'image prédéterminé sur les contenants, avec une deuxième unité d'impression (6) disposée le long du chemin de transport (P) des contenants en aval de la première unité d'impression (4) et imprimant les contenants (10) déjà imprimés avec le premier élément d'impression avec un deuxième élément d'image,
**caractérisé en ce que**
le dispositif (1) présente un dispositif d'inspection (8) disposé en aval des unités d'impression (4, 6) dans le sens de transport des contenants contrôlant l'impression appliquée aux contenants et un dispositif d'attribution (12) attribuant un résultat d'inspection du dispositif d'inspection (8) aux unités d'impression (4, 6) et attribuant au résultat d'inspection le dispositif de maintien (22) ayant maintenu le contenant (10) inspecté pendant l'impression, les deux unités d'impression étant conçues pour et destinées à appliquer des couleurs différentes au contenant, au moins une unité d'impression (4, 6) étant une unité d'impression à jet d'encre, dans lequel il est possible de déterminer quelle unité d'impression a appliqué l'impression en évaluant sa couleur.

2. Dispositif selon la revendication précédente,
**caractérisé en ce que**
le dispositif présente une troisième unité d'impression (12) disposée le long du chemin de transport (P) des contenants en aval de la deuxième unité d'impression (4) et imprimant les contenants (10) déjà imprimés avec le premier élément d'impression et le deuxième élément d'impression avec un troisième élément d'image.

3. Dispositif selon au moins l'une des revendications précédentes,
**caractérisé en ce qu'**
au moins une unité d'impression (4, 6) est disposée de manière stationnaire.

4. Dispositif selon au moins l'une des revendications précédentes,
**caractérisé en ce que**
le dispositif d'inspection (8) présente un premier dispositif d'enregistrement d'image (82) conçu pour enregistrer des images à résolution spatiale en couleur.

5. Dispositif (1) selon la revendication 4,
**caractérisé en ce que**
le dispositif d'inspection (8) présente un deuxième dispositif d'enregistrement d'image (84) conçu pour enregistrer des images à résolution spatiale.

6. Dispositif selon au moins l'une des revendications précédentes,
**caractérisé en ce que**
le dispositif présente un dispositif de commande commandant au moins une unité d'impression en tenant compte du résultat d'inspection.

7. Procédé d'impression de contenants, les contenants (10) étant transportés à l'aide d'un dispositif de transport (2) le long d'un chemin de transport (P) prédéterminé et les contenants (10) étant imprimés aussi bien à l'aide d'une première unité d'impression (4) qu'à l'aide d'une deuxième unité d'impression (6), les deux unités d'impression appliquant des couleurs différentes au contenant, au moins une unité d'impression (4, 6) étant une unité d'impression à jet d'encre, les contenants étant inspectés par un dispositif d'inspection (8) disposé en aval des unités d'impression (4, 6),
**caractérisé en ce que**
les contenants inspectés et/ou un résultat d'inspection est attribué à au moins une unité d'impression (4, 6) ayant imprimé le contenant et le dispositif de transport (2) transporte les contenants (10) à l'aide d'une pluralité de dispositifs de maintien (22) et le résultat d'inspection est attribué au dispositif de maintien (22) ayant maintenu le contenant inspecté pendant l'application des éléments d'impression, dans lequel il est possible de déterminer quelle unité d'impression a appliqué l'impression en évaluant sa couleur.

8. Procédé selon la revendication 7,
**caractérisé en ce que**
le dispositif d'inspection (8) délivre au moins une information caractéristique de l'apparition d'une erreur d'impression définie.

9. Procédé selon la revendication 8,
**caractérisé en ce que**
l'erreur d'impression est sélectionnée parmi un groupe d'erreurs d'impression comprenant un étalement incorrect d'un fluide d'impression sur le contenant, un positionnement incorrect d'un premier élément d'impression par rapport à un deuxième élément d'impression, un positionnement incorrect d'un premier élément d'image appliqué dans une zone déterminée du contenant par rapport à un deuxième élément d'image appliqué dans la zone déterminée du contenant, une bavure d'au moins un élément d'impression, une défaillance d'au moins un élément de buse d'au moins une unité d'impression, une position incorrecte d'au moins un élément d'impression par rapport au contenant, une erreur de couleur de l'élément d'impression, combinaisons de celles-ci ou similaire.

10. Procédé selon la revendication 8,
**caractérisé en ce qu'**
une origine de l'erreur d'au moins une unité d'impression est attribuée à une erreur d'impression détectée.

11. Procédé selon la revendication 7,
**caractérisé en ce que**
le dispositif d'inspection (8) enregistre au moins une image du contenant à inspecter.

12. Procédé selon au moins l'une des revendications précédentes,
**caractérisé en ce qu'**
une pluralité de résultats d'inspection est évaluée par rapport à au moins une erreur d'impression.
